# EUROPEAN PATENT SPECIFICATION

(11) **EP 1 138 192 B1**
(45) Date of publication and mention of the grant of the patent: **28.07.2004**
(21) Application number: 00302752.1
(22) Date of filing: 31.03.2000
(51) Int. Cl.: A01J 5/017

(54) **Automatic milking**
Automatische Melkvorrichtung
Traite automatique

(43) Date of publication of application: 04.10.2001
(73) Proprietor: DeLaval Holding AB, 147 21 Tumba (SE)
(72) Inventor: Birk, Uzi, 141 93 Huddinje (SE); Sjolund, Hans Martin, 113 23 Stockholm (SE)
(74) Representative: Lerwill, John

(56) References cited:
- EP-A- 0 733 884
- WO-A-96/13151
- WO-A-99/31966
- DE-A- 19 651 005
- US-A- 4 190 020
- US-A- 5 865 138

## Description

This invention relates to the milking of animals and it is particularly concerned with the separation of foremilk in an automatic milking process. It is well known that, in the case of milking cows, the milk initially extracted from the teat of an udder is generally of relatively poor quality due to contamination by comparatively high levels of bacteria and/or dirt, this initial milk flow being commonly called the premilk or foremilk. So that the overall quality, and hence the value of the milk obtained from a cow is not impaired by the foremilk it has become normal practice for the foremilk to be separated and discarded. In the past this was effected by the parlour worker directing a few squirts of milk from each teat either onto the floor of the milking parlour or into a cup before fitting the teat cups of the milking machine onto the teats of the animal. In recent years automatic milking machines have been developed which are capable of applying the teat cups to the teats without requiring any human intervention, and alternative ways of separating the foremilk suitable for use with such automatic machines have been proposed.

In US-A-4190020 there is described a valve device which is connected in a main milk line leading to a bulk storage tank and has a second outlet connected to a branch line leading to a bypass tank. A control unit connected to the valve device incorporates a timer which controls the valve device so that the milk flow for a predetermined time period from the start of milking is diverted into the branch line and hence to the bypass tank. The valve device also includes a sensor for sensing the milk colour with the intention of detecting milk contaminated by blood or pus, but this becomes effective only after the predetermined time for separation of the foremilk has elapsed. With such an arrangement, the amount of foremilk separated and discarded is substantially constant for all animals and this amount needs to be chosen to ensure that all the low quality foremilk will be separated in all cases. As a consequence some good quality milk will inevitably be lost with the separated foremilk.
The same disadvantage is suffered by the arrangements described in US-A-5865138 and WO 99/31966. The former discloses use of three-way valve controlled by a timing circuit and/or a flow sensor for separation of foremilk, whereas the latter employs a mechanical arrangement which is operated by collection of predetermined amount of milk in a cup.

WO 96/13151 discloses removing foremilk as a separate operation before applying the teat cups for the main milking, the foremilking being performed with an extra set of teat cups or with a teat cleaning device and the foremilk being removed for a fixed time which can be adjusted depending on the results of a check made on the colour, electric conductivity or the filter resistance of the foremilk.

The present invention aims to provide a method and an apparatus which can reduce the wastage of good quality milk when separating the foremilk while still ensuring effective separation of all the foremilk.

More particularly the invention resides in a method of milking an animal wherein milk extracted from a teat of an animal is directed along a milk path to a container, an initial portion of the milk extracted from the teat being diverted from the milk path, and an optical property of the milk extracted from the teat is sensed, characterised in that the optical property is the transparency of the milk to electromagnetic radiation, and the diversion of the initial milk flow from the milk path leading to the container is controlled in dependence upon the sensed optical transparency.

The diversion of milk can be so controlled that the amount of foremilk separated is dependent upon the sensed optical transparency.

The optical property of the milk which is sensed is preferably the transparency of the milk to transmission of light therethrough. It has been observed that the transparency initially falls rapidly as milk flow commences and then it rises again after an initial peak in the opacity of the milk which coincides with the flow of foremilk. Thus, by terminating the separation of foremilk when the rise in transparency is detected, it can be ensured that all the foremilk of unacceptable quality is separated without good quality milk being lost in the process.

The present invention also provides an apparatus for the automatic milking of animals comprising a teat cup connected to a main milk line through which milk extracted from a teat is conveyed, a device for directing milk to flow through the main milk line or to a branch line, control means for controlling the device so that an initial amount of milk extracted from a teat is directed into the branch line, and an optical sensing means for sensing an optical property of the milk upstream of the flow directing device, characterised in that the optical sensing means comprises a device for sensing the transparency of the milk, and the control means is responsive to a signal from the sensing device and operates the flow directing device to terminate flow of milk into the branch line and to direct the milk to flow through the main milk line when a predetermined change in the sensed optical transparency occurs.

The sensing means is preferably a device for sensing the transparency of the milk to transmission of light, and this device suitably has a light source, such as a light omitting diode and a photosensitive component, e.g. a phototransistor, located on opposite sides of the milk flow path through the sensing device.

The control means is preferably programmed to operate the flow directing device so that the flow of milk into the branch line is terminated upon the milk transparency rising again following the initial fall at the commencement of the milk flow.

In connection with some automatic milking methods and systems it has been proposed to carry out premilking of the teats to extract the foremilk before attaching to the teats the teat cups employed during the subsequent main milking stage. A system of this kind is described in WO 99/27775. In such systems it would be of advantage to be able to detect if the premilking of a teat has not been correctly completed e.g. in order to prevent foremilk reaching and contaminating the milk collected in a bulk storage tank.

In accordance with another aspect therefore, the invention provides an automatic milking method in which premilking is performed to remove foremilk prior to a main milking stage, characterised in that the transparency of the milk is sensed at least during an initial period of the main milking stage and therefrom it is determined whether premilking was carried out correctly.

As will be understood from the description and explanations given above, incorrectly completed premilking can be detected by sensing a rise in the milk transparency occurring after an initial fall, which is indicative of a peak appearing in the opacity of the milk during a short period from the beginning of the milk flow due to the presence of foremilk. In response to incorrect premilking being detected, the main milking stage can be interrupted or a device, such as a three way valve, may be actuated to divert a first part of the milk flow during the main milking stage away from a milk line along which the milk is normally passed to a collection vessel during the main milking stage.

There is also provided in accordance with the invention an automatic milking apparatus, for performing the method of the further aspect, comprising means for premilking a teat from an udder, a teat cup for attachment to the teat after premilking for carrying out a main milking stage in which milk extracted by the teat cup is conducted through a milk line to a container, and a transparency sensing means for sensing the transparency of the milk extracted from the teat by the teat cup, characterised in that means are provided for interrupting delivery of milk to the container in response to the milk transparency sensed by the sensing means rising after an initial fall in transparency at the beginning of milk extraction during the main milking stage.

To assist a clear understanding of the invention it will now be described in greater detail with reference being made to the accompanying drawings, in which:
Figure 1 is a graph showing the transparency of milk to transmission of light plotted against time in the course of milking one quarter of a cows's udder; and
Figure 2 is a schematic illustration of an apparatus of an automatic milking machine in accordance with the invention.

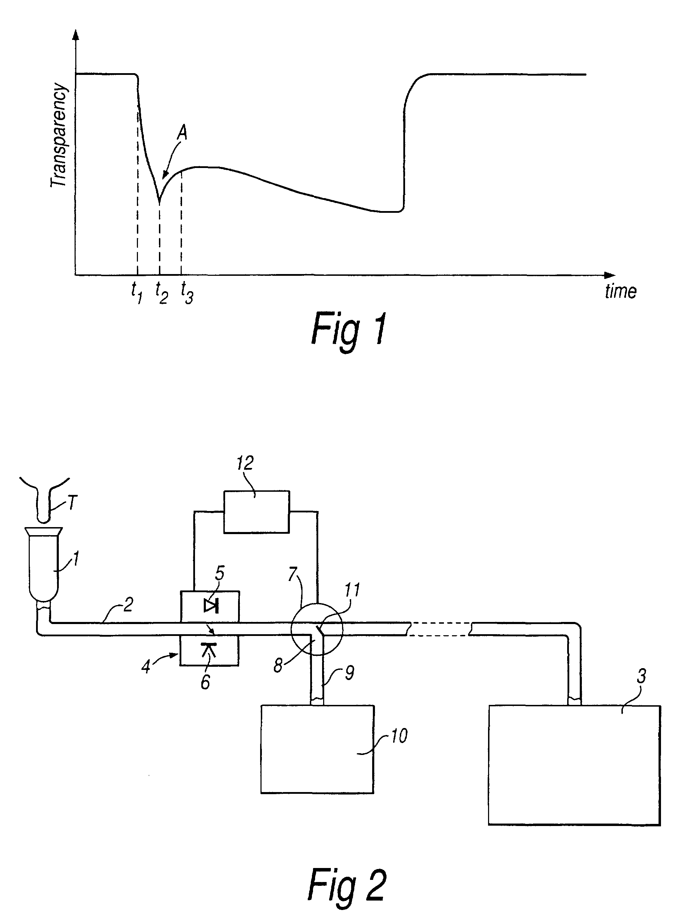

The graph of Figure 1 shows how milk transparency to light typically varies in the course of a complete milking of one quarter of the udder of a cow. The milk flow through the transparency sensor commences at time t₁ and as to be expected the transparency sensed immediately falls rapidly due to the influence of the milk entering the sensor. It has been observed that rather than flattening out at a lower level, the transparency curve then rises again initially quite steeply, which means the opacity of the milk reaches a peak at time t₂ as indicated in Figure 1. The rate rise in transparency soon reduces after which the curve flattens out for a time before gradually falling as the milking proceeds. At the end of milking, the milk flow ceases and the transparency sensed by the sensor immediately returns essentially to the initial value at the beginning of the milking. The distinctive dip A in the transparency curve occurring within about 15 to 20 seconds from the start of milk flow is due to the foremilk. By detecting this dip and separating off the milk which flows up to time t₃, all the foremilk will be excluded from the milk which is collected for consumption without any good quality milk being lost as a consequence of being directed to waste with the foremilk.

Figure 2 illustrates part of an automatic milking machine. The other parts which are not shown in the drawing form no part of the present invention and may be as generally known in the field of milking. Although only a single teat cup 1 is illustrated, it will be understood that four such teat cups will generally be provided in a machine for milking cows. The teat cup is connected to a milk tube 2 which constitutes a milk line for conveying milk to a collection vessel 3 such as a bulk storage tank. Of course, a milk meter for measuring the milk flow could be included in the milk line as could other known devices, such as sensors for detecting milk originating from a cow suffering from mastitis. At a short distance from the teat cup 1 the milk tube 2 is equipped with a milk transparency sensor 4. The sensor has a milk path therethrough with a light source 5, such as a light emitting diode disposed at one side of the milk path and a photosensitive component 6, such as a phototransistor, disposed at the other side of the flow path directly opposite the light source so that the sensor will produce a signal dependent on the light transmission across the flow path and hence the transparency of the milk passing along the flow path. Downstream of the sensor 4 and ideally very close thereto a three-way valve 7 is provided in the milk line, this valve having a branch outlet 8 to which one end of a tube is connected, the other end of the tube being connected to a container 10 for waste milk, or it could be directed to a drain. The valve 7 has a valve member 11 operable to interrupt flow through the milk line to the collection container 3, and to divert the milk instead through the branch outlet 8 into the tube 9 and hence to the waste container 10. A control unit 12 is connected to receive an output signal from the transparency sensor 4 and to emit a control signal for controlling the valve member 11 of the three way valve 7.

If the apparatus is to be used for separating foremilk, when the teat cup 1 is attached to the teat T the valve member 10 of the three way valve may be initially set for directing milk passing along the milk tube 2 from the teat cup to the waste container 10, or the control unit 12 may be programmed to set the valve member 11 in this position upon receiving from the transparency sensor 4 a signal indicating that milk flow has commenced, i.e, at time t₁ in Figure 1. As milking proceeds the milk transparency sensed by the sensor 4 will follow the curve shown in Figure 1. The control unit 12 determines when the dip or inverted peak A in the transparency curve has passed and a time t₃ will send a signal to the valve 7 to switch over the valve member 11 so that the subsequent milk flow will be directed along the main milk line to the storage container 3. Of course, the actuation of the valve 7 will be delayed slightly to take account of the milk in the milk line between the sensor 4 and the valve member 11.

The sensor 4, valve 7 and control unit 12 may also serve to detect milk affected by mastitis and direct such milk to the waste container 10. In the event of such milk being detected, e.g. a characteristically low milk transparency being sensed, the control unit will respond by maintaining the valve 7 adjusted to divert all the milk to the waste container 10. Of course, if preferred, alternative means could be provided for detecting milk affected by mastitis, e.g. a conductivity sensor, and/or for redirecting the milk flow so that this milk does not reach the storage container 3.

The apparatus of Figure 2 may alternatively be used in a milking machine which is adapted to perform a preliminary premilking operation before the teat cup 1 is attached to the teat T for a subsequent main milking stage in order to detect if the premilking has not been properly completed with the consequence that foremilk is extracted from the teat during the main milking stage. In this case, when the teat cup is attached to the teat, since no foremilk is to be expected, the control unit 12 will be programmed to set the valve 7 so that the milk will be directed along the main milk line to the storage container 3. In the event that the inverted peak or dip characteristic A of the transparency curve is detected, thereby indicating the presence of foremilk, the control unit 12 will respond by actuating the valve 7 so that the valve member 11 opens the branch outlet 8 and the foremilk is diverted to the waste container 10. After a sufficient delay for all the foremilk to have flowed through the valve 7 the valve member 11 can be reset by the control unit to direct the flow to the storage container 10 for good milk. It will be appreciated that in this embodiment the valve 7 will need to be located so that the presence of foremilk can be detected and the valve operated, if necessary, before any foremilk can flow through the valve into the milk line leading to the container 3. Instead of operating the valve 7, the apparatus could be arranged to respond in some other way, such as by interrupting the main milking phase of the milking operation, if the presence of foremilk is unexpectedly detected by the transparency sensor 4 and the control unit 12.

Modifications are of course possible without departing from the scope of the invention. For example, the transparency sensor could be included in the structure of the teat cup as could the diverter valve 7.

## Claims

1. A method of milking an animal wherein milk extracted from a teat of an animal is directed along a milk path to a container, an initial portion of the milk extracted from the teat being diverted from the milk path, and an optical property of the milk extracted from the teat is sensed, **characterised in that** the optical property is the transparency of the milk to electromagnetic radiation, and the diversion of the initial milk flow from the milk path leading to the container is controlled in dependence upon the sensed optical transparency.

2. A method according to claim 1, wherein the diversion of milk is so controlled that the amount of foremilk separated is dependent upon the sensed optical transparency.

3. A method according to claim 1 or 2, wherein the transparency of the milk to transmission of light therethrough is sensed.

4. A method according to claim 1, 2 or 3, wherein the diversion of milk from the milk path is terminated upon the milk transparency rising after reaching an initial peak in opacity after the start of milking.

5. An apparatus for the automatic milking of animals comprising a teat cup (1) connected to a main milk line (2) through which milk extracted from a teat is conveyed, a device (7) for directing milk to flow through the main milk line or to a branch line (8), control means (12) for controlling the device so that an initial amount of milk extracted from a teat is directed into the branch line (8), and an optical sensing means for sensing an optical property of the milk upstream of the flow directing device (7), **characterised in that** the optical sensing means comprises a device (4) for sensing the transparency of the milk, and the control means (12) is responsive to a signal from the sensing device (4) and operates the flow directing device (7) to terminate flow of milk into the branch line (8) and to direct the milk to flow through the main milk line when a predetermined change in the sensed optical transparency occurs.

6. An apparatus according to claim 5, wherein the sensing device (4) is adapted to sense the transparency of milk to transmission of light through the milk.

7. An apparatus according to claim 6, wherein the sensing device comprises a light source (5) and a photosensitive component (6) disposed on opposite sides of the milk flow path through the sensing device.

8. An apparatus according to claim 7, wherein the photosensitive component is a photo transistor (6) and/or the light source comprises a light emitting diode (5).

9. An apparatus according to any one of claims 5 to 8, wherein the control means (12) is arranged to operate the flow directing device (7) so that milk flow into the branch line (8) is terminated upon the milk transparency rising again following the initial fall at the commencement of milk flow.

10. An automatic milking method in which premilking is performed to remove foremilk prior to a main milking stage, **characterised in that** the transparency of the milk is sensed at least during an initial period of the main milking stage and therefrom it is determined whether premilking was carried out correctly.

11. A method according to claim 10, wherein the transparency of the milk is sensed by transmission of light therethrough.

12. A method according to claim 10 or 11, wherein in response to incorrect premilking being detected, the main milking stage is interrupted or a device is actuated to divert a first part of the milk flow during the main milking stage away from a milk line through which milk is passed to a collection vessel during the main milking stage.

13. A method according to claim 10, 11 or 12, wherein incorrectly completed premilking is detected by the milk transparency rising after an initial fall thereby indicating a peak in the opacity of the milk occurring within a short time from the beginning of the milk flow.

14. An automatic milking apparatus comprising means for premilking a teat from an udder, a teat cup (1) for attachment to the teat after premilking for carrying out a main milking stage in which milk extracted by the teat cup is conducted through a milk line (2) to a container (3), and a transparency sensing means (4) for sensing the transparency of the milk extracted from the teat by the teat cup, **characterised in that** means (7) are provided for interrupting delivery of milk to the container in response to the milk transparency sensed by the sensing means (4) rising after an initial fall in transparency at the beginning of milk extraction during the main milking stage.

15. An automatic milking apparatus according to claim 14, wherein the means (7) for interrupting delivery of milk to the container is operable to divert milk away from the milk line (2) at least for an initial period from commencement of the main milking stage.

16. An automatic milking apparatus according to claim 14 or 15, wherein the means for interrupting delivery of milk comprises a three-way valve.

17. An automatic milking apparatus according to claim 14, 15 or 16, wherein the transparency sensing means comprises sensor (4) defining a milk flow path and having a light source (5) and a photosensitive component (6) disposed on opposite sides of the milk flow path.

18. An automatic milking apparatus according to claim 17, wherein the light source is a light emitting diode (5) and/or the photosensitive component comprises a phototransistor (6).

## Patentansprüche

1. Verfahren zum Melken eines Tieres, wobei die aus einer Zitze eines Tieres extrahierte Milch entlang einer Milchbahn zu einem Behälter gelenkt wird, eine Anfangsmenge der aus der Zitze extrahierten Milch von der Milchbahn abgelenkt wird und eine optische Eigenschaft der aus der Zitze extrahierten Milch erfasst wird, **dadurch gekennzeichnet, dass** die optische Eigenschaft die Transparenz der Milch für elektromagnetische Strahlen ist und das Ablenken des Anfangsmilchstroms von der zu dem Behälter führenden Milchbahn in Abhängigkeit von der erfassten optischen Transparenz gesteuert wird.

2. Verfahren nach Anspruch 1, wobei das Ablenken der Milch so gesteuert wird, dass die Menge der getrennten Vormilch von der erfassten optischen Transparenz abhängig ist.

3. Verfahren nach Anspruch 1 oder 2, wobei die Transparenz der Milch für die Übertragung von Licht durch die Milch hindurch erfasst wird.

4. Verfahren nach Anspruch 1, 2 oder 3, wobei das Ablenken der Milch aus der Milchbahn bei Zunehmen der Milchtransparenz, nach dem Erreichen eines Anfangshöchstwerts der Lichtdurchlässigkeit nach dem Beginn des Melkens, beendet wird.

5. Vorrichtung zum automatischen Melken von Tieren, die Folgendes umfasst:
eine Zitzenkappe (1), die an die Hauptmilchleitung (2) angeschlossen ist, durch die die aus der Zitze extrahierte Milch gefördert wird, eine Einrichtung (7) zum Lenken der Milch, um durch die Hauptmilchleitung oder zu einer Abzweigleitung (8) zu strömen, Steuereinrichtungen (12) zum Steuern der Vorrichtung, so dass eine Anfangsmenge der aus einer Zitze extrahierten Milch in die Abzweigleitung (8) gelenkt wird, und eine optische Erfassungseinrichtung zum Erfassen einer optischen Eigenschaft der Milch stromaufwärts der Stromlenkeinrichtung (7), **dadurch gekennzeichnet, dass** die optische Erfassungseinrichtung eine Einrichtung (4) zum Erfassen der Transparenz der Milch umfasst und dass die Steuereinrichtung (12) auf ein Signal aus der Erfassungseinrichtung (4) reagiert und die Stromlenkeinrichtung (7) betreibt, um den Milchstrom in die Abzweigleitung (8) zu beenden und um die Milch zu lenken durch die Hauptmilchleitung zu fließen, wenn eine vorbestimmte Änderung in der erfassten optischen Transparenz eintritt.

6. Vorrichtung nach Anspruch 5, wobei die Erfassungseinrichtung (4) eingerichtet ist, die Transparenz der Milch bei dem Übertragen von Licht durch die Milch hindurch zu erfassen.

7. Vorrichtung nach Anspruch 6, wobei die Erfassungseinrichtung eine Lichtquelle (5) und einen lichtempfindlichen Baustein (6), die an entgegengesetzten Seiten der Milchstrombahn durch die Erfassungseinrichtung angeordnet sind, umfasst.

8. Vorrichtung nach Anspruch 7, wobei der lichtempfindliche Baustein ein Fototransistor (6) ist und/oder die Lichtquelle eine Leuchtdiode (5) umfasst.

9. Vorrichtung nach einem der Ansprüche 5 bis 8, wobei die Steuereinrichtung (12) eingerichtet ist, die Stromlenkeinrichtung (7) wirksam werden zu lassen, so dass beim erneuten Zunehmen der Milchtransparenz, nach dem anfänglichen Abnehmen zu Beginn des Milchstroms, der Milchstrom in die Abzweigleitung (8) beendet wird.

10. Automatisches Melkverfahren, bei dem das Vormelken, um die Vormilch zu entfernen, bevor einem Hauptmelkarbeitsgang durchgeführt wird, **dadurch gekennzeichnet, dass** die Transparenz der Milch wenigstens während eines Anfangszeitraums des Hauptmelkarbeitsgangs erfasst wird und daraus bestimmt wird, ob das Vormelken richtig ausgeführt wurde.

11. Verfahren nach Anspruch 10, wobei die Transparenz der Milch durch das Übertragen von Licht durch die Milch hindurch erfasst wird.

12. Verfahren nach Anspruch 10 oder 11, wobei in Reaktion auf das Erkennen von fehlerhaftem Vormelken der Hauptmelkarbeitsgang unterbrochen wird oder eine Vorrichtung betätigt wird, um einen ersten Teil des Milchstroms während des Hauptmelkarbeitsgangs von einer Milchleitung, durch die während des Hauptmelkarbeitsgangs Milch zu einem Sammelbehälter geführt wird, abzulenken.

13. Verfahren nach Anspruch 10, 11 oder 12, wobei fehlerhaft abgeschlossenes Vormelken, durch das nach einem anfänglichen Abnehmen Zunehmen der Milchtransparenz, durch das ein innerhalb einer kurzen Zeit nach dem Beginn des Milchstroms auftretender Höchstwert in der Lichtdurchlässigkeit der Milch angezeigt wird, erfasst wird.

14. Automatische Melkvorrichtung, die Folgendes umfasst: Einrichtungen zum Vormelken einer Zitze eines Euters, eine Zitzenkappe (1) zum Befestigen an der Zitze nach dem Vormelken zum Ausführen eines Hauptmelkarbeitsgangs, bei dem die durch die Zitzenkappe extrahierte Milch durch eine Milchleitung (2) zu einem Behälter (3) geführt wird, und eine Transparenzerfassungseinrichtung (4) zum Erfassen der Transparenz der aus der Zitze durch die Zitzenkappe extrahierten Milch, **dadurch gekennzeichnet, dass** Einrichtungen (7) zum Unterbrechen der Zulieferung der Milch zu dem Behälter in Reaktion auf das durch die Erfassungseinrichtung (4) erfasste Zunehmen der Milchtransparenz, nach einem anfänglichen Absinken der Milchtransparenz bei dem Beginn der Milchextraktion während des Hauptmelkarbeitsgangs, bereitgestellt sind.

15. Automatische Melkvorrichtung nach Anspruch 14, wobei die Einrichtungen (7) zum Unterbrechen der Zulieferung der Milch zu dem Behälter betrieben werden können, um die Milch, wenigstens für einen Anfangszeitraum von dem Beginn des Hauptmelkarbeitsgangs an, von der Milchleitung (2) abzulenken.

16. Automatische Melkvorrichtung gemäß Anspruch 14 oder 15, wobei die Einrichtung zum Unterbrechen der Zulieferung der Milch ein Dreiwegeventil umfasst.

17. Automatische Melkvorrichtung nach Anspruch 14, 15 oder 16, wobei die Transparenzerfassungsvorrichtung den eine Milchstrombahn begrenzenden Sensor (4) umfasst und eine Lichtquelle (5) und einen lichtempfindlichen Baustein (6), die an entgegengesetzten Seiten der Milchstrombahn angeordnet sind, aufweist.

18. Automatische Melkvorrichtung nach Anspruch 17, wobei die Lichtquelle eine Leuchtdiode (5) ist und/oder der lichtempfindliche Baustein einen Fototransistor (6) umfasst.

## Revendications

1. Méthode de traite d'un animal dans laquelle le lait extrait d'un trayon d'un animal est dirigé le long d'une trajectoire de lait jusqu'à un réservoir, une partie initiale du lait extrait du trayon étant déviée de la trajectoire de lait, et une propriété optique du lait extrait du trayon est analysée, **caractérisée en ce que** la propriété optique est la transparence du lait au rayonnement électromagnétique, et la déviation du flux de lait initial de la trajectoire de lait menant au réservoir est contrôlée en fonction de la transparence optique analysée.

2. Méthode selon la revendication 1, dans laquelle la déviation du lait est contrôlée de manière à ce que la quantité de premier lait séparée dépende de la transparence optique analysée.

3. Méthode selon la revendication 1 ou 2, dans laquelle la transparence du lait à la transmission de la lumière à travers est analysée.

4. Méthode selon la revendication 1, 2 ou 3, dans laquelle la déviation du lait de la trajectoire de lait est interrompue lors de l'accroissement de la transparence du lait après atteinte d'un pic initial en opacité après le début de la traite.

5. Appareil pour la traite automatique d'animaux comprenant un gobelet trayeur (1) relié à une ligne de lait principale (2) à travers laquelle le lait extrait d'un trayon est transporté, un dispositif (7) destiné à diriger le flux de lait à travers la ligne de lait principale ou vers une ligne secondaire (8), un moyen de contrôle (12) destiné à contrôler le dispositif de manière à ce qu'une quantité initiale de lait extrait d'un trayon soit dirigée dans la ligne secondaire (8), et un moyen de détection optique pour la détection d'une propriété optique du lait en amont du dispositif dirigeant le flux (7), **caractérisé en ce que** le moyen de détection optique comprend un dispositif (4) pour la détection la transparence du lait, et le moyen de contrôle (12) est sensible à un signal provenant du dispositif de détection (4) et actionne le dispositif dirigeant le flux (7) pour interrompre le flux de lait dans la ligne secondaire (8) et pour diriger le flux de lait à travers la ligne de lait principale lorsqu'un changement prédéterminé dans la transparence optique détectée se produit.

6. Appareil selon la revendication 5, dans lequel le dispositif de détection (4) est adapté pour détecter la transparence du lait à la transmission de la lumière à travers le lait.

7. Appareil selon la revendication 6, dans lequel le dispositif d'analyse comprend une source de lumière (5) et un composant photosensible (6) disposés sur des côtés opposés de la trajectoire du flux de lait à travers le dispositif d'analyse.

8. Appareil selon la revendication 7, dans lequel le composant photosensible est un phototransistor (6) et/ou la source de lumière comprend une diode électroluminescente (5).

9. Appareil selon l'une quelconque des revendications 5 à 8, dans lequel le moyen de contrôle (12) est arrangé pour actionner le dispositif dirigeant le flux (7) de manière à ce que le flux de lait dans la ligne secondaire (8) soit interrompu lors de l'accroissement de transparence du lait à nouveau suivant la baisse initiale au début du flux du lait.

10. Méthode de traite automatique dans laquelle la première traite est accomplie afin de retirer le premier lait avant une phase de traite principale, **caractérisée en ce que** la transparence du lait est détectée au moins durant une période initiale de la phase de traite principale et de là, il est déterminé si la première traite a été effectuée correctement.

11. Méthode selon la revendication 10, dans laquelle la transparence du lait est détectée par transmission de la lumière à travers.

12. Méthode selon la revendication 10 ou 11, dans laquelle en réponse à la détection d'une première traite incorrecte, la phase de traite principale est interrompue ou un dispositif est actionné pour dévier une première partie du flux de lait au cours de la phase de traite principale d'une ligne de lait à travers laquelle le lait est transmis jusqu'à un récipient de collecte au cours de la phase de traite principale.

13. Méthode selon la revendication 10, 11 ou 12, dans laquelle une première traite exécutée incorrectement est détectée par l'accroissement de transparence du lait après une baisse initiale indiquant de ce fait un pic dans l'opacité du lait se produisant peu de temps après le début du flux de lait.

14. Appareil de traite automatique comprenant un moyen de première traite d'un trayon d'un pis, un gobelet trayeur (1) pour la fixation du trayon après la première traite pour exécution d'une phase de traite principale dans laquelle le lait extrait par le gobelet trayeur est conduit à travers une ligne de lait (2) jusqu'à un réservoir (3), et un moyen de détection de la transparence (4) pour la détection de la transparence du lait extrait du trayon par le gobelet trayeur, **caractérisé en ce que** ces moyens (7) sont prévus pour interrompre la délivrance de lait jusqu'au réservoir en réponse à la transparence du lait détectée par le moyen de détection (4) accroissant après une baisse initiale dans la transparence au début de l'extraction du lait au cours de la phase de traite principale.

15. Appareil de traite automatique selon la revendication 14, dans lequel le moyen (7) pour interrompre le débit de lait jusqu'au réservoir est actionnable pour dévier le lait de la ligne de lait (2) au moins pour une période initiale dès le début de la phase de traite principale.

16. Appareil de traite automatique selon la revendication 14 ou 15, dans lequel le moyen pour interrompre le débit de lait comprend une vanne à trois voies.

17. Appareil de traite automatique selon la revendication 14, 15 ou 16, dans lequel le moyen de défection de la transparence comprend un capteur (4) définissant une trajectoire de flux de lait et comprenant d'une source de lumière (5) et un composant photosensible (6) disposés sur des côtés opposés de la trajectoire du flux de lait.

18. Appareil de traite automatique selon la revendication 17, dans lequel la source de lumière est une diode électroluminescente (5) et/ou le composant photosensible comprend un phototransistor (6).
